# DEMANDE DE BREVET EUROPEEN

(11) **EP 0 919 120 A1**
(43) Date de publication de la demande: **02.06.1999**
(21) Numéro de dépôt: 97390008.7
(22) Date de dépôt: 20.11.1997
(51) Int. Cl.: A01K 63/06

(54) **Support intermédiaire adapté à l'aquarium et regroupant les fonctions de chauffage et d'amortissement des contraintes mécaniques**

(71) Demandeur: AB7 Industries SA, 31450 Deyme (FR)
(72) Inventeur: Chelle, René, Salarié AB7 INDUSTRIES SA, 31190 Grepiac (FR); Caparros, Alain, Salarié AB7 INDUSTRIES SA, 31600 Muret (FR); Lautier, Jean-Pierre, Salarié AB7 INDUSTRIES SA, 31670 Labege (FR)

(57) **Abrégé**

L'invention définit un système de contrôle de la température de l'eau d'un aquarium (6) par mise en contact externe d'un film chauffant (1) réalisé en matériau résistant jouant le double rôle de résistance chauffante et de thermistance, intégré dans une table support (5) conçue pour réduire les contraintes thermomécaniques induites dans le fond et les parois de l'aquarium (1).

## Description

La température est un facteur déterminant pour assurer la maintien de l'équilibre du biotope que constitue l'aquarium. Par rapport à la température ambiante (18° à 22°c) qui règne en moyenne dans les locaux d'habitation, il est généralement nécessaire de réchauffer l'eau afin de garantir la survie des poissons. Le contrôle et la régulation de ce paramètre physico-chimique autorisent une plus grande diversité dans le choix de la flore et de la faune aquatique de l'aquarium.

Dans l'approche traditionnelle, la température de l'eau d'un aquarium est contrôlée par un thermoplongeur, fonctionnant par effet joule avec des puissances allant de quelques divines de Watts à 1 kilowatt pour les aquariums de plus de 100 litres. L'expérience et la théorie montrent que dans un environnement domestique, il faut environ une puissance de chauffage de l'ordre de 1 Watt/litre d'eau.

Ce thermoplongeur intégré dans une capsule de verte étanche comprend:
- une résistance chauffante de valeur précise fonction de la puissance à dissiper, alimentée par le réseau d'alimentation basse tension de 220 Volts,
- Un thermorupteur qui ouvre le circuit d'alimentation électrique de la résistance lorsque l'eau atteint la température de consigne entre 18°C et 32°C définie par les espèces des poissons présents dans l'aquarium.
- un bouton de réglage de la température de consigne dans la gamme de température déjà évoquée.

Le thermoplongeur que nous venons de décrire est de conception classique thermomécanique. Des versions plus modernes sont électroniques mais réalisent la même fonctionnalité d'ouvrir et de fermer le circuit d'alimentation électrique de la résistance autour de la température de consigne et sont fondamentalement conçus de la même manière c'est à dire conditionnés dans une capsule de verre étanche plongée dans l'aquarium.

Bien que très répandus, ces thermoplongeurs présentent de très graves inconvénients en terme de sécurité et d'esthétique:
- Ils sont dangereux en cas de défaut d'étanchéité ou de rupture du tube de verre de protection car ils mettent directement l'énergie du réseau de distribution 220V dans l'aquarium avec des risques évidents d'électrocution pour l'utilisateur.
- Ils sont peu performants car, à cause de l'isolation par le tube de verre, la température de la résistance interne au tube est pendant la période de chauffe beaucoup plus élevée que la température de consigne entraînant des surchauffes temporelles dangereuses pour les poissons et des imprécisions dans la régulation.
- Ils sont peu esthétiques car placés dans l'aquarium ils sont une gêne incontournable dans la recherche d'une présentation panoramique.
Considérant cet argumentaire, on peut observer que l'origine première des inconvénients, au delà de la fragilité de l'appareil, se trouve dans le fait qu'il est placé en position immergée dans l'aquarium. C'est la base de la réflexion qui a conduit au dépôt du présent brevet associée à des considérations plus globales sur la gestion de l'aquarium que nous allons expliciter:

Dans l'application courante, la construction recommande de placer l'aquarium sur une surface relativement souple pour réduire les contraintes qui s'exercent sur les jointures des plaques de verre. Le plus souvent, en effet, ces plaques de verre sont collées et l'on conçoit bien que l'on ne puisse éviter des effets résiduels de "gauchissement" de la structure. Ces défauts peuvent être aisément compensés par une épaisseur de matière souple placée en support de l'aquarium constitué le plus souvent de polystyrène expansé en plaque. Si l'on ne prend pas cette précaution, le placement de l'aquarium sur une surface rigide et gauche développe des contraintes et entraîne très vite une rupture des joints de colle et l'apparition des fuites d'eau dégradantes pour l'environnement et dangereuses pour la faune et la flore de l'aquarium.

L'originalité de notre innovation est donc d'abord de rapprocher ces deux problèmes sécuritaires systématiquement rencontrés en aquariophilie et de proposer une solution sous forme d'un système compact de support d'aquarium assurant le chauffage de l'eau par l'extérieur au travers de la paroi réalisant le fond et réduisant par sa souplesse les contraintes mécaniques. C'est le premier point de notre revendication. Le deuxième point réside dans l'originalité du système de chauffage même, dans la mesure où il apporte une solution de contrôle de la température de l'eau de l'aquarium par un appareil placé à l'extérieur et au contact de l'aquarium.

Cet appareil comporte:
- une couche résistive chauffante fonctionnant par effet joule placée au contact extérieur de l'aquarium , en dessous du niveau de l'eau, de préférence dans le fond pour éviter de réduire la visibilité.
- un dispositif de prise de contact permettant l'alimentation en énergie électrique de la couche résistive (L'alimentation est réalisée en 230 Volts).
- un dispositif de mesure: capteurs par thermistance ou autre dispositif fonction de la température placé au contact pour accéder au plus près à la température de l'eau.
- Un dispositif électronique de contrôle assurant l'ouverture et la fermeture de l'alimentation électrique autour de la valeur de consigne.

Si l'appareil est constitué de fonctions classiques pour une régulation: capteurs, interrupteur, résistance chauffante, le choix des composants et leur association fonctionnelle est nouvelle et permet de supprimer radicalement les inconvénients des thermoplongeurs immergés:
- plus de risques pour l'utilisateur ou pour la faune et la flore aquatique puisque le système est placé à l'extérieur de l'aquarium.
- plus de détérioration de l'esthétique puisque le système est placé dans le fond sous l'aquarium.
- plus de problèmes d'imprécision de régulation puisque la résistance chauffante et le capteur de température sont situés à proximité sur le même support de verre au contact de l'eau.

Pour aboutir à ce système fonctionne! global, le coeur de l'innovation est mis en oeuvre par l'usage de couches résistantes souples qui peuvent jouer le double rôle de résistance chauffante et de thermistance. Cela permet une réalisation homogène du support sur lequel est placé l'aquarium. Cette homogénéité est techniquement indispensable. Elle apporte de plus une simplification de réalisation et donc une réduction très conséquente du prix de revient.

Plusieurs matériaux candidats sont susceptibles de remplir cette fonction. Ce sont des couches sérigraphiées semi conductrices, ce sont des peintures semi-conductrices, ce sont des pâtes isolantes chargées en particules conductrices: poudre de carbone ou poudre métallique car elles ont une résistance électrique compatible avec l'effet Joule, résistance électrique fonction de la température c'est à dire capable de servir de capteur de température.

Le dispositif complet associant résistance chauffante et thermistance sont réalisés en un seul dépôt, soit directement sur le verre constituant le fond de l'aquarium, soit sur un support souple placé au contact de l'aquarium.
La simplicité de réalisation ne doit pas cacher l'excellente qualité de la mesure et de la régulation qui peut être réalisée par le dispositif dans sa configuration complète où le film souple comportant la résistance chauffante et la thermistance est placée entre le fond de l'aquarium et sur un support de polystyrène par exemple. Dans ce cas, l'isolation thermique est très conséquente: elle limite les pertes et conduit à une mesure très précise de la température de l'eau dans l'aquarium.

Dans la mesure où l'isolation vis à vis de l'extérieur est suffisante, par exemple réalisée par du plastique expansé à forte résistivité thermique, dont la souplesse est favorable à la tenue mécanique , on obtient:
- un transfert quasi total de l'énergie électrique vers le chauffage de l'aquarium.
- une mesure parfaite de la température de l'eau de l'aquarium à une petite différence de température près: l'écart entre la surface intérieure et extérieure reste inférieur à ½ °C dans nos réalisations.

## Revendications

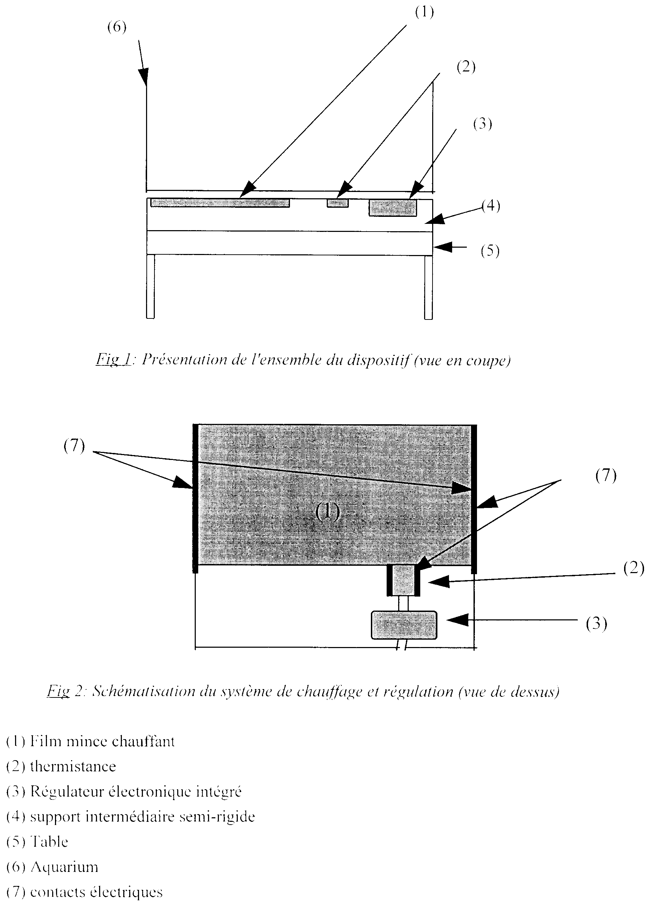

1. Système de chauffage et de contrôle de la température de l'eau d'un aquarium caractérisé par le fait qu'il comporte, placé en contact externe une structure chauffante placée sous l'aquarium et conçue pour réaliser les fonctions d'apport d'énergie thermique et de support intermédiaire semi-rigide éliminant les contraintes mécaniques s'exerçant sur la structure de l'aquarium lorsqu'il existe un défaut de parallélisme entre le fond de l'aquarium et la surface de la table portante (figure 1).

2. Système selon la revendication 1 caractérisé par le fait qu'il comporte une partie active chauffante réalisée en couche mince résistive (1), un capteur de température (2), une régulation électronique (3), un support intermédiaire en matériau isolant électrique et thermique (4) (figure 1)

3. Système selon les revendications 1 et 2 et caractérisé en ce que les couches résistantes sont des couches sérigraphiées sur support isolant semi-rigide.

4. Système selon les revendications 1 et 2 et caractérisé en ce que les couches résistantes sont des peintures semi-conductrices sur support isolant semi-rigide.

5. Système selon les revendications 1 et 2 et caractérisé en ce que les couches résistantes sont des pâtes isolantes chargées en particules conductrices sur support isolant souple.

6. Système selon les revendications 1 et 2 caractérisé par le fait que le film chauffant, le capteur, la régulation et le support intermédiaire forment un ensemble compact pouvant être placé et enlevé facilement.

7. Système selon les revendications 1 à 6 caractérisé par le fait que le film chauffant peut être réalisé séparément puis assemblé.

8. Système selon les revendications 1 à 7 caractérisé par le fait que le film chauffant peut être réalisé par dépôt direct du semi-conducteur sur le support intermédiaire.

9. Système selon les revendications 1 à 8 caractérisé par le fait que la partie semi-conductrice joue le double rôle de résistance chauffante et de capteur de température grâce à la réalisation des deux surfaces séparées comportant chacune un connecteur électrique et venant toutes deux au contact externe de l'aquarium (figure 2).

10. Système selon les revendications 1 à 9 caractérisé par le fait que la résistance chauffante est supportée par un support intermédiaire isolant thermique permettant de réduire les pertes thermiques vers l'extérieur et donc d'accéder pour la fonction capteur à une mesure plus précise de la température dans l'eau de l'aquarium.

11. Système selon les revendications 1 à 10 caractérisé par le fait que le support intermédiaire présente une souplesse suffisante permettant de compenser les défauts de parallélisme entre le fond de l'aquarium et la table support.

12. Système selon les revendications 1 à 11 caractérisé par le fait que le support intermédiaire peut être réalisé par tout matériau déformable ayant des propriétés d'isolation électrique.
